# FASCICULE DE BREVET EUROPEEN

(11) **EP 1 017 645 B1**
(45) Date de publication et mention de la délivrance du brevet: **23.01.2002**
(21) Numéro de dépôt: 98945357.6
(22) Date de dépôt: 22.09.1998
(51) Int. Cl.: C03C 21/00, H01J 9/24

(54) **PROCEDE DE REALISATION D'UN PANNEAU DE VISUALISATION COMPORTANT UNE DALLE A STABILITE DIMENSIONNELLE AMELIOREE**
VERFAHREN ZUR HERSTELLUNG EINER ANZEIGETAFEL MIT EINER FRONT-PLATTE MIT VERBESSERTES DIMENSIONSSTABILITÄT
METHOD FOR PRODUCING A DISPLAY PANEL COMPRISING A FACEPLATE WITH ENHANCED DIMENSIONAL STABILITY

(30) Priorité: 23.09.1997 FR 9711815
(43) Date de publication de la demande: 12.07.2000
(73) Titulaire: THOMSON multimedia, 92100 Boulogne Billancourt (FR)
(72) Inventeur: BARET, Guy, Thomson-CSF Propriété Intel., F-94117 Arcueil Ce dex (FR)
(74) Mandataire: Ruellan-Lemonnier, Brigitte
(86) Numéro de dépôt international: FR9802033
(87) Numéro de publication internationale: WO9915472

(56) Documents cités:
- EP-A- 0 716 333
- EP-A- 0 791 563
- EP-A- 0 793 132
- FR-A- 2 696 443
- GB-A- 2 236 317
- US-A- 4 846 868
- PATENT ABSTRACTS OF JAPAN vol. 097, no. 005, 30 mai 1997 & JP 09 017333 A (CANON INC), 17 janvier 1997
- PATENT ABSTRACTS OF JAPAN vol. 012, no. 068 (P-672), 3 mars 1988 & JP 62 209414 A (ALPS ELECTRIC CO LTD), 14 septembre 1987

## Description

La présente invention est relative aux panneaux de visualisation d'image dont les dalles doivent conserver des dimensions sensiblement constantes tout au long de leur procédé de fabrication. Elle concerne plus particulièrement un procédé de réalisation d'un panneau de visualisation d'image qui convient particulièrement bien pour ces applications.

Ce procédé s'applique en particulier aux panneaux à plasma de tous types, alternatifs à entretien coplanaire (ACC), alternatifs de type XY, à courant continu, et aux panneaux à émission de champ (FED) qui subissent des traitements thermiques au cours de leur fabrication.

Un panneau de visualisation à plasma utilise deux dalles de verre sur lesquelles sont déposés un ou plusieurs réseaux d'électrodes. Les dalles sont assemblées l'une à l'autre de manière que les réseaux d'électrodes soient sensiblement orthogonaux. Chaque intersection d'électrodes définit une cellule à laquelle correspond un espace gazeux.

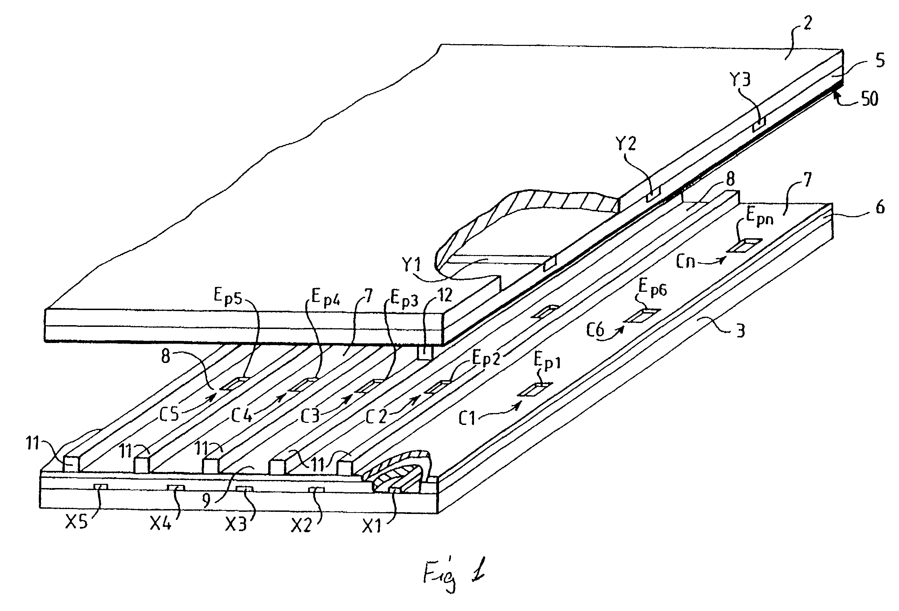

Les deux dalles subissent plusieurs traitement avant de pouvoir être assemblées l'une à l'autre. On se réfère à la figure unique qui montre un panneau de visualisation à plasma classique de type X, Y auquel s'applique le procédé selon l'invention.

Sur une première dalle 2 qui forme la face avant du panneau de visualisation, c'est-à-dire la face que regarde un observateur, sont déposés un ou plusieurs réseaux d'électrodes métalliques Y1 à Y3. Il n'y a qu'un seul réseau pour les panneaux de type X, Y et deux pour les panneaux de type coplanaire auxquels s'applique aussi le procédé selon l'invention. Ce dépôt peut se faire sous vide.

Les électrodes Y1 à Y3 sont ensuite recouvertes d'une couche 5 de matériau diélectrique incluant en surface une couche de magnésie 50.

Sur la seconde dalle 3 qui forme la face arrière (face à l'opposé de l'observateur) est déposé un réseau d'électrodes métalliques X1 à X5.

Les électrodes X1 à X5 sont aussi recouvertes d'une couche 6 de matériau diélectrique incluant généralement aussi, en surface, une couche de magnésie (non représentée). La couche diélectrique 6 est recouverte de couches formant des bandes 7, 8, 9 de matériaux luminophores correspondant par exemple aux couleurs vert, rouge et bleu.

Les bandes luminophores 7, 8, 9 sont disposées parallèlement aux électrodes X1 à X5. Dans les panneaux à plasma de type X, Y les bandes luminophores 7, 8, 9 sont équipées d'épargnes Ep1, Ep2, ... Epm au niveau des surfaces en regard de deux électrodes croisées X1 à X5 et Y1 à Y3. Chaque épargne Ep1, Ep2 ... Epn matérialise une cellule C1, C2 ..., Cn.

Les bandes luminophores 7, 8, 9 sont séparées par des barrières 11 qui ont une fonction de confinement. Elles empêchent la propagation d'une décharge vers des cellules voisines non adressées.

Elles évitent aussi que le rayonnement ultraviolet créé par une décharge dans une cellule donnée n'excite les luminophores de cellules adjacentes et n'engendre un manque de saturation des couleurs.

Lors de l'assemblage des deux dalles 2, 3, des espaceurs 12 servent à ce que la distance entre les deux dalles 2, 3 ou la hauteur de l'espace gazeux soit sensiblement constante.

Ces espaceurs 12 sont réalisés sur une des deux dalles et lors de l'assemblage, l'autre dalle vient en butée contre eux. La qualité de fonctionnement du panneau peut être dégradée si la hauteur de l'espace gazeux accuse des variations trop importantes.

Les couches diélectriques 5, 6 sont réalisées, par exemple, par un émail à base d'oxyde de plomb, de silice et d'oxyde de bore. Ce dépôt se fait à chaud à des températures d'environ 580°C, ce qui est supérieur à la température de ramollissement du verre sodocalcique ordinaire utilisé pour les dalles 2, 3.

La réalisation des barrières 11 qui peuvent aussi jouer un rôle d'espaceurs, se fait par superposition de couches et cuisson à des températures comprises entre environ 480°C et 550°C.

Le dépôt des luminophores 7, 8, 9 intègre une phase de cuisson à des températures comprises entre 400°C et 480°C.

La réalisation des éléments cités ci-dessus à savoir les électrodes, les barrières, les espaceurs, les bandes luminophores et les épargnes font souvent appel à des techniques de masquage photographiques et/ou à des techniques d'impression par toiles de sérigraphie.

La qualité de fonctionnement du panneau dépend des caractéristiques géométriques et dimensionnelles des cellules et donc de la qualité de registration, c'est-à-dire de la précision des positionnements de ces éléments les uns par rapport aux autres.

Par exemple les électrodes Y1 à Y5 doivent être correctement positionnées sur la dalle avant 2 puis après le dépôt de la couche de matériau diélectrique 5 et de la magnésie 50, les espaceurs 12 doivent être correctement positionnés.

De la même manière sur la dalle 3 arrière, il faut d'abord positionner les électrodes X1 à X5 puis sur la couche diélectrique 6, les bandes luminophores 7, 8, 9 et leurs épargnes Ep1 à Epn, puis les barrières 11. Toutes ces registrations doivent être réalisées avec des tolérances qui dépendent de la structure et de la résolution du panneau de visualisation.

On peut retenir la valeur de 30 ppm (parties par million) pour un écran de type télévision de 42 pouces de diagonale avec 560 lignes.

La principale difficulté à effectuer de telles registrations vient des variations dimensionnelles des dalles 2, 3 lorsqu'elles sont soumises à un traitement thermique.

Les dalles de verre utilisées couramment sont en verre sodocalcique dont la température de transition vitreuse Tg est de l'ordre de 520°C. Ce type de verre affiche d'importantes variations de dimensions dans un sens ou dans l'autre (compaction ou dilatation) lors du retour à température ambiante après un traitement thermique. Ces variations sont une compaction de l'ordre de 400 à 600 ppm lors d'une cuisson à environ 600°C. Ces variations sont difficiles à prendre en compte en vue de la registration car elles ne sont pas reproductibles à mieux que plusieurs dizaines de ppm.

Pour éviter cette très forte variation dimensionnelle, on a été amené à stabiliser la dalle de verre par une précuisson à environ 580°C avant de commencer le dépôt des divers éléments sur la dalle.

Cette étape de cuisson répond à peine aux exigences de tolérance citées ci-dessus et est coûteuse et délicate à réaliser car le verre à tendance à se déformer et à perdre sa planéité.

Il apparaît sur le marché des verres de compositions différentes de celle du verre sodocalcique qui ne présentent pas autant de variations dimensionnelles après avoir subi les cuissons successives. Ils sont dits à haute température de ramollissement. Leur température de transition vitreuse Tg est plus élevée que celle des verres sodocalciques. Elle est de l'ordre de 600°C à 620°C. Les dalles n'évoluent plus qu'avec des écarts inférieurs à 20 ou 30 ppm dans la mesure où elles ont subi une précuisson stabilisatrice.

Cependant ces verres sont de deux à quatre fois plus chers que les verres sodocalciques et le verre devient alors la matière la plus chère du panneau.

La présente invention vise à remédier à ces problèmes de variations dimensionnelles en proposant un procédé de réalisation d'un panneau de visualisation d'image comportant au moins une dalle de verre notamment de verre sodocalcique.

Une telle dalle présente le grand intérêt d'un faible coût matière et de plus présente, une plus grande résistance aux chocs et aux contraintes thermiques.

La réalisation de la dalle inclut une opération de trempage du verre dans un bain contenant au moins un sel fondu d'un métal alcalin, à une température supérieure à environ 450°C, pendant plus d'une heure. La dalle est ensuite soumise à au moins un traitement thermique lors d'une opération de dépôt d'au moins un élément tel qu'électrode, couche diélectrique, espaceur, barrière. Le trempage dans le bain vise à stabiliser les dimensions de la dalle lors du traitement thermique.

Le sel fondu peut être avantageusement un sel (par exemple un nitrate) de sodium et/ou de potassium et/ou de lithium.

De préférence la durée de trempage est d'environ 8 heures.

De bons résultats au point de vue stabilité dimensionnelle sont obtenues avec un bain à environ 460°C.

D'autres caractéristiques et avantages de l'invention apparaîtront à la lecture de la description qui suit, faite à titre d'exemple non limitatif.

Selon l'invention le procédé de réalisation d'un panneau de visualisation d'image comportant au moins une dalle en verre comporte une opération de trempage du verre dans un bain contenant au moins un sel fondu d'un métal alcalin, à une température supérieure à environ 450°C, pendant plus d'une heure.

Pendant ce trempage il se produit au moins un phénomène. Il s'agit d'une variation dimensionnelle du verre. Par contre, lors des traitements thermiques ultérieurs auxquels la dalle va être soumise, lors de dépôt d'élément tels que les électrodes, les couches diélectriques, les barrières, les espaceurs, ses variations dimensionnelles seront tout à fait acceptables et pourront être prises en compte en vue de la registration. L'utilisation d'une telle dalle permet de contrôler à mieux que 30 ppm ses dimensions tout au long du cycle de fabrication du panneau.

Dans le cas particulier de verre sodocalcique et de l'utilisation dans le bain de sel autre que le sodium, il se produit un échange ionique entre les ions sodium du verre et les ions du bain. Le verre et notamment sa surface perd des ions sodium et s'enrichit en ions du bain.

Les paramètres du traitement de trempe chimique à savoir la composition du bain, sa température et la durée du trempage peuvent être adaptés en fonction des traitements thermiques ultérieurs infligés à la dalle et notamment des paramètres suivants température, durée de cuisson et vitesse de refroidissement.

Par exemple, une dalle d'épaisseur 3 millimètres subissant un trempage pendant 8 heures dans un bain contenant des sels de potassium à 460°C présentera une valeur de compaction moyenne nulle avec. une dispersion de + ou - 30 ppm après avoir subi une première cuisson de 30 minutes à 580°C pour le dépôt de la couche diélectrique avec une vitesse de refroidissement de 2,5°C par minute et une seconde cuisson de 30 minutes à 480°C pour le dépôt des espaceurs avec une vitesse de refroidissement de 5°C par minute.

La dimension des ions potassium étant plus grande que celle des ions sodium, les contraintes dans le verre en surface et jusqu'à quelques microns de profondeur, sont modifiées et en particulier la surface du verre se trouve en compression après la trempe chimique. Lors de la première cuisson à haute température, par exemple pour le dépôt des couches diélectriques ou éventuellement des électrodes, si elles sont réalisées en pâte d'argent, le potassium qui était en surface diffuse dans le verre, les contraintes en surface se relâchent et la surface ne se trouve plus en compression.

Une telle dalle, après son traitement de trempe chimique est beaucoup plus résistante aux chocs et supporte mieux la température qu'une dalle en verre sodocalcique utilisée classiquement. Cet avantage est appréciable lors du transport et du stockage des dalles avant d'entreprendre le traitement thermique.

D'autres détails de mise en oeuvre du trempage sont décrits dans la demande de brevet intitulée "Treatment of vitreous material" ("traitement de matériau vitreux") déposée par la société GLAVERBEL, en Grande-Bretagne, le même jour que la présente demande.

La présente invention s'applique à tous types de panneaux de visualisation dont le cycle de fabrication possède des traitements thermiques à des températures supérieures à environ 400°C.

## Revendications

1. Procédé de réalisation d'un panneau de visualisation comportant au moins une dalle en verre, dont les dimensions sont conservées sensiblement constantes lorsqu'elle est soumise à au moins un traitement thermique lors d'une opération de dépôt sur la dalle d'au moins un élément tel qu'électrode, couche diélectrique, espaceur, barrière, **caractérisé en ce qu'**il comporte avant le traitement thermique, pour stabiliser les dimensions de la dalle, une opération de trempage du verre de la dalle dans un bain contenant au moins un sel fondu d'un métal alcalin, à une température supérieure à environ 450°C, pendant plus d'une heure.

2. Procédé selon la revendication 1, **caractérisé en ce que** la durée du trempage est d'environ huit heures.

3. Procédé selon l'une des revendications 1 à 2, **caractérisé en ce que** la température du bain est d'environ 460°C.

4. Procédé selon l'une des revendications 1 à 3, **caractérisé en ce que** le bain contient au moins un sel de potassium.

5. Procédé selon l'une des revendications 1 à 4, **caractérisé en ce que** le bain contient au moins un sel de sodium.

6. Procédé selon l'une des revendications 1 à 5, **caractérisé en ce que** le bain contient au moins un sel de lithium.

## Patentansprüche

1. Verfahren zur Herstellung eines Wiedergabeschirms mit wenigstens einer Glasplatte, deren Abmessungsänderungen im wesentlichen konstant bleiben, wenn sie wenigstens einer Wärmebehandlung bei einem Vorgang zur Aufbringung wenigstens eines Elementes wie einer Elektrode, einer dielektrischen Schicht, eines Abstandshalters, einer Schranke unterliegt,
**gekennzeichnet durch**
einen Eintauchvorgang des Glases der Platte in ein Bad mit wenigstens einem geschmolzenem Salz eines Alkaliemetalls bei einer Temperatur oberhalb von etwa 450 °C während mehr als einer Stunde vor der Wärmebehandlung zur Stabilisierung der Abmessungen der Platte.

2. Verfahren nach Anspruch 1, **dadurch gekennzeichnet, daß** die Eintauchdauer etwa acht Stunden beträgt.

3. Verfahren nach einem der Ansprüche 1 bis 2, **dadurch gekennzeichnet, daß** die Temperatur des Bads ungefähr 460 °C beträgt.

4. Verfahren nach einem der Ansprüche 1 bis 3, **dadurch gekennzeichnet, daß** das Bad wenigstens ein Kaliumsalz enthält.

5. Verfahren nach einem der Ansprüche 1 bis 4, **dadurch gekennzeichnet, daß** das Bad wenigstens ein Natriumsalz enthält.

6. Verfahren nach einem der Ansprüche 1 bis 5, **dadurch gekennzeichnet, daß** das Bad wenigstens ein Lithiumsalz enthält.

## Claims

1. Process for producing a display panel comprising at least one glass tile, **characterized in that** the production of the tile includes an operation of immersing the glass in a bath containing at least one molten salt of an alkaline metal, at a temperature greater than approximately 450°C for more than one hour, the tile then being subjected to at least one heat treatment during an operation in which at least one element such as an electrode, dielectric layer, spacer or barrier is deposited on the tile, the purpose of the immersion in the bath being to stabilize its dimensions during the heat treatment.

2. Process according to Claim 1, **characterized in that** the immersion time is approximately eight hours.

3. Process according to either of Claims 1 and 2, **characterized in that** the temperature of the bath is approximately 460°C.

4. Process according to one of Claims 1 to 3, **characterized in that** the bath contains at least one potassium salt.

5. Process according to one of Claims 1 to 4, **characterized in that** the bath contains at least one sodium salt.

6. Process according to one of Claims 1 to 5, **characterized in that** the bath contains at least one lithium salt.
